Europäisches Patentamt

European Patent Office

Office européen des brevets

(19)

(11) Veröffentlichungsnummer : **0 051 186**
**B1**

(12) **EUROPÄISCHE PATENTSCHRIFT**

(45) Veröffentlichungstag der Patentschrift :
15.08.84

(21) Anmeldenummer : 81108401.1

(22) Anmeldetag : 16.10.81

(51) Int. Cl.³ : **F 15 B 13/02, F 16 K 31/52**

(54) **Hydrauliksystem mit einer hydromechanischen Arretiereinrichtung für die Arbeitsstellung eines Steuerventils.**

(30) Priorität : 03.11.80 US 203300

(43) Veröffentlichungstag der Anmeldung :
12.05.82 Patentblatt 82/19

(45) Bekanntmachung des Hinweises auf die Patenterteilung : 15.08.84 Patentblatt 84/33

(84) Benannte Vertragsstaaten :
**AT DE FR GB IT SE**

(56) Entgegenhaltungen :
DE-A- 2 133 715
US-A- 2 276 979
US-A- 2 689 585
US-A- 3 511 276
US-A- 3 650 297
US-A- 3 837 359
US-A- 3 866 880

(73) Patentinhaber : **DEERE & COMPANY**
**1 John Deere Road**
**Moline Illinois 61265 (US)**

(72) Erfinder : **Stephenson, Dwight Bruce**
**118 Carmela**
**Hudson Iowa 50643 (US)**
Erfinder : **Koehler, David Lawrence**
**1570 Byron**
**Waterloo Iowa 50701 (US)**

(74) Vertreter : **Gramm, Werner, Dipl.-Ing. et al**
**Patentanwälte Gramm + Lins Theo-**
**dor-Heuss-Strasse 2**
**D-3300 Braunschweig (DE)**

## Beschreibung

Die Erfindung betrifft ein Hydrauliksystem mit einer Druckmittelquelle, einem Sumpf, einem Steuerventil mit bestimmten Arbeitsstellungen zur Steuerung des Druckmittelflusses zwischen Quelle, Sumpf und einem Hydromotor o. dergl., einer Druckmittelverbindung zwischen Quelle und Steuerventil, mit einem Mengenventil, das die Druckmittelverbindung zwischen Quelle und Steuerventil in einen stromauf und einen stromab gelegenen Abschnitt unterteilt, mit einer Arretiervorrichtung, die in eine Arretierstellung verschiebbar ist, um so das Steuerventil in zumindest einer seiner gewählten Arbeitsstellungen lösbar festzuhalten, und mit einer druckgesteuerten Einrichtung, die die Arreretiervorrichtung in ihre Arretierstellung drückt und eine Verstellung des Steuerventils aus der gewählten Arbeitsstellung heraus verhindert, wobei diese druckgesteuerte Einrichtung zusätzlich aufweist :

— eine Gehäusebohrung, die mit der Arretiervorrichtung fluchtet und an ihrem einen Ende an den stromauf liegenden Abschnitt der Druckmittelverbindung angeschlossen ist ;

— einen Kolben, der innerhalb der gehäusebohrung verschiebbar gelagert ist und dessen eines Ende von dem Druck im stromauf liegenden Abschnitt und dessen anderes Ende von dem Druck im stromab liegenden Abschnitt beaufschlagt sind, wobei der Kolben mit einer Axialbohrung in seinem Kolbenboden verschiebbar auf einer Stange geführt ist, die mit ihrem einen Ende an der Arretiervorrichtung anliegt ;

— einer Feder, die den Kolben beaufschlagt und über eine Koppelung zwischen Kolben und Stange diese gegen die Arretiervorrichtung schiebt.

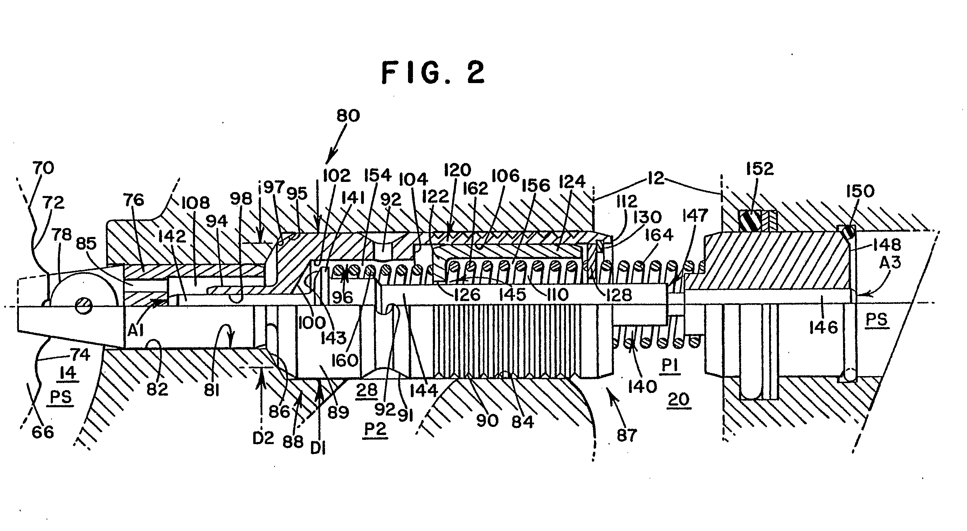

Eine derartige Ausführungsform läßt sich der deutschen Offentegungsschrift 21 33 715 (Figur 2) entnehmen. Dabei wird die Arretiervorrichtung von einem mit zwei sich gegenüberliegenden Druckseiten versehenen Kolben beaufschlagt, die jeweils dem Druck vor und hinter einem Mengenventil im Hydrauliksystem ausgesetzt sind, wobei das Steuerventil hinter dem Mengenventil angeschlossen ist. Die vor dem Mengenventil liegende Druckseite des Kolbens der hydromechanischen Einrichtung steht zusätzlich unter einem konstante Federdruck ; die Druckseite hinter dem Mengenventil weist eine größere Druckfläche auf als die Druckseite des Kolbens vor dem Mengenventil, wobei die Dimensionierung der Druckseiten so vorgenommen ist, daß sich die aus den am Kolben angreifenden hydraulischen Drücken stammenden Kräfte während des Arbeitsbetriebes, z. B. so lange der Hydromotor seine Endstellung noch nicht erreicht hat, in wesentlichen aufheben.

Wenn bei dieser vorbekannten Einrichtung der Pumpendruck unter einen Schwellenwert absinkt, z. B. weil die Antriebsmaschine für die Hydraulikpumpe während des Hubes des Hydraulikzylinders abgeschaltet wird, dann wird die Arretiervorrichtung nicht automatisch gelöst, ermöglicht also nicht die automatische Rückstellung des Steuerventils in seine Neutralstellung. Dies ergibt sich aus der Tatsache, daß die auf das Steuerventil in dieser « abgeschlossenen » Stellung wirkenden Zentrierfedern des Steuerventils und Hydraulikkräfte nicht groß genug sind, um die von der Feder der Hydromechanischen Einrichtung ausgeübte Arretierkraft zu überwinden. Bei dem eingangs erläuterten Hydrauliksystem wird somit die Hydraulikfunktion lediglich durch erneutes Starten der Antriebsmaschine reaktiviert, ohne daß die Bedienungsperson das Steuerventil wissentlich in eine Arbeitsstellung zurückverschiebt.

Der Erfindung liegt somit die Aufgabe zugrunde, das eingangs beschriebene Hydrauliksystem so zu verbessern, daß bei Abfall des Systemdrucks während der Ausübung einer Hydraulikfunktion die Arretiervorrichtung automatisch gelöst wird und die Rückverstellung des Steuerventils in seine Neutralstellung zuläßt.

Diese Aufgabe wird gemäß der Erfindung durch folgende Merkmale gelöst :

a) Das zweite Ende der Gehäusebohrung ist an den Sumpf angeschlo sen ;

b) in der Gehäusebohrung ist eine den Kolben umschließende Hülse verschiebbar gelagert, deren eines offenes Ende mit dem stromauf liegenden Abschnitt der Druckmittelverbindung in Verbindung steht, während sein anderes, mit dem Sumpf in Verbindung stehendes Ende halsförmig ausgebildet ist und mit einer Bohrung verschiebbar und abdichtend auf der Stange geführt ist ;

c) die Stange weist einen innerhalb der Hülse liegenden verdickten Abschnitt auf ;

d) der Kolben ist zwischen dem offenen Hülsenende und dem verdickten Stangenabschnitt verschiebbar, wobei seine Verschiebung zum offenen Hülsenende hin durch einen ersten Anschlag begrenzt ist ;

e) eine erste Feder stützt sich zwischen Kolben und verdicktem Stangenabschnitt ab ;

f) eine zweite Feder stützt sich zwischen dem ersten Anschlag und dem Kolben ab ;

g) in die Hülse mündet zwischen ihrem halsförmigen Ende und dem Kolben eine Öffnung, die an den stromab liegenden Abschnitt der Druckmittelverbindung angeschlossen ist.

Die bei dem erfindungsgemäßen Hydrauliksystem aufgebrachte Arretierkraft ist somit im wesentlichen hydraulischen Ursprungs. Bei der Arretiervorrichtung ist eine Vorspannung vorgesehen, die sich aus der Druckdifferenz ergibt. Die auf das Steuerventil wirkenden Hydraulikkräfte werden durch die hydromechanische Einrichtung ausgeglichen. Ferner ist das neue System so ausgelegt, daß die Arretiervorrichtung in einen begrenzten Umfang auf Bedingungen bei rückwärtiger Strömung im System anspricht. Die Arretiervorrichtung kann nur von begrenzten Kräften beaufschlagt werden.

Weitere Merkmale und Vorteile der Erfindung werden anhand eines Ausführungsbeispieles erläutert.

In der Zeichnung ist eine als Beispiel dienende Ausführungsform der Erfindung dargestellt. Es zeigen :

Figur 1 bei teilweise schematischer Darstellung einen Längsschnitt durch ein Hydrauliksystem und

Figur 2 in vergrößertem Maßstab einen Ausschnitt der Figur 1.

Das dargestellte Hydrauliksystem 10 umfaßt ein Gehäuse 12 mit einem Sumpf 14. Eine angetriebene Pumpe 16 saugt über eine Ansaugleitung Druckmittelflüssigkeit aus dem Sumpf 14 und führt über eine Druckleitung über einen Einlaß 18 in das Gehäuse 12. Eine Gehäuseleitung 20 verbindet den Einlaß 18 mit einem rohrförmigen Mengenventil 22, das einen einstellbaren Einlaß 24 aufweist, der durch Verschwenken des Handgriffs 26 in bestimmter Weise verstellt werden kann, um die von der Gehäuseleitung 20 zu einer weiteren Gehäuseleitung 28 strömende Druckmittelmenge zu verändern. Dementsprechend liegen die Gehäuseleitung 20 bezogen auf das Mengenventil 22 stromauf und die Gehäuseleitung 28 stromab. Durch die Gehäuseleitung 28 gelangt das Druckmittel von dem Mengenventil 22 zu einem druckbeaufschlagbaren Ventilschieber 30, der in einer Bohrung 32 des Gehäuses 12 verschiebar gelagert ist. Das eine Ende des Ventilschiebers ist dem Systemdruck P1 in der Gehäuseleitung 20 und das andere Schieberende dem Systemdruck P2 in der Gehäuseleitung 28 ausgesetzt. Der Ventilschieber 30 wird von einer Feder 36 gegen einen zylindrischen Anschlag 34 gedrückt und verstellt sich in Abhängigkeit vom Flüssigkeitsdruck in den Gehäuseleitungen 20, 28, um eine gewünschte Strömung zwischen der Gehäuseleitung 28 und einem Auslaß 38 übereine ringförmige Ausdrehung 40 in der Bohrung 32 aufrechtzuerhalten, wie es in der deutschen Offenlegungsschrift 21 33 715 bzw. dem entsprechenden US-Patent 3 721 160 beschrieben ist.

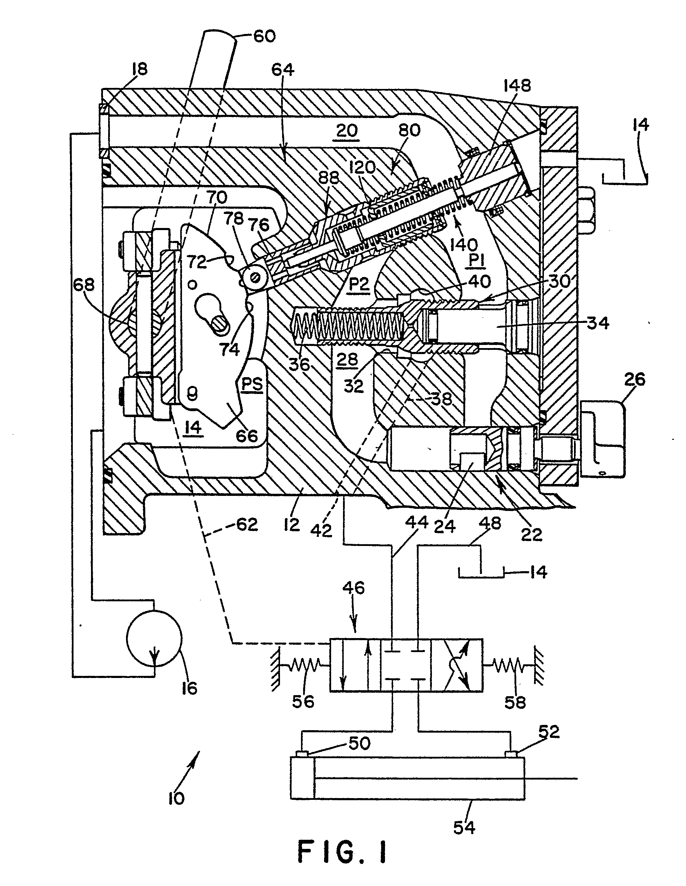

Über die Auslaßleitung 38 gelangt das Druckmittel zu einem Auslaß 42 des Gehäuses 12 und von dort über eine Druckleitung 44 zu einem Anschluß eines verschiebbaren Steuerventils 46, das über einen zweiten Anschluß über eine Rücklaufleitung 48 mit dem Sumpf 14 verbunden ist. Das Steuerventil 46 steuert die Druckmittelverbindung von den Leitungen 44 und 48 zu den Arbeitsanschlüssen 50, 52 eines hydraulischen Verbrauchers, z. B. eines Zylinders 54. Zentrierfedern 56, 58 drücken das Steuerventil 46 in seine Neutralstellung (dargestellt in Figur 1), in der Strömungsmittelfluß zum oder vom Zylinder 54 unterbunden ist. Das Steuerventil 46 läßt sich nach links und rechts durch einen Stellhebel 60 und ein nur schematisch angedeutetes Gestänge 62 in bestimmte Arbeitsstellungen verschieben, um den Zylinder 54 einzuziehen oder auszufahren.

Das Hydrauliksystem 10 umfaßt ferner eine Arretiervorrichtung 64 zur automatischen und lösbaren Verriegelung des Steuerventils 46 in seinen ausgewählten Arbeitsstellungen. Die Arretiervorrichtung 64 umfaßt einen Nocken 66, der im Sumpf 14 angeordnet und mit einer Welle 68 verbunden ist, die mit dem Stellhebel 60 in Verbindung steht. Demnach wird der Nocken 66 zusammen mit dem Stellhebel 60 verschwenkt, wenn letzterer zur Verschiebung des Steuerventils in oder aus seinen ausgewählten Arbeitspositionen betätigt wird. Der Nocken 66 weist eine bogenförmige Oberfläche 70 mit zwei Vertiefungen 72, 74 auf. In dem Gehäuse 12 ist ein gegenüber der genannten Oberfläche 70 hin und her verschiebbares Sperrelement 76 angeordnet, das mit einer Rolle 78 bestückt ist, die an der Nockenoberfläche 70 anliegt.

Das Hydrauliksystem 10 umfaßt ferner eine hydromechanische Einrichtung 80, die die Arretiervorrichtung 64 kräftemäßig beaufschlagt und in Figur 2 dargestellt ist. Diese hydromechanische Einrichtung 80 umfaßt eine stufenförmige Gehäusebohrung 81 mit einem Bohrungsabschnitt 82 kleineren Durchmessers, der mit einem Bohrungsabschnitt 84 größeren Durchmessers über eine konische Ringschulter 86 verbunden ist. Das Ende des Bohrungsabschnitts 84 größeren Durchmessers ist gegenüber der Gehäuseleitung 20 offen. Ein mittlerer Abschnitt des Bohrungsabschnitts 84 ist an die Gehäuseleitung 28 angeschlossen. Das Ende des Bohrungsabschnitts 82 kleineren Durchmessers steht mit dem Sumpf 14 in Verbindung. Das Sperrelement 76 der Arretiervorrichtung 64 besteht aus einem zylindrischen Körper, der in dem Bohrungsabschnitt 82 kleineren Durchmessers verschiebbar gelagert ist. Der genannte zylindrische Körper weist mehrere Öffnungen 85 auf (von denen eine in Figur 2 dargestellt ist), die sich in axialer Richtung durch den zylindrischen Körper hindurch erstrecken.

Die hydromechanische Einrichtung 80 umfaßt ferner einen Hülseneinsatz 87 mit einer Hülse 88. Letztere besteht aus einem hohlzylindrischen Körper 89 mit einem Außendurchmesser D1 und ist in dem Bohrungsabschnitt 84 größeren Durchmessers verschiebbar gelagert. Der Hülsenkörper 89 weist in seiner äußeren Mantelfläche mehrere Ringnuten 90 und im Abstand hiervon einen Ringschlitz 91 auf, der über mehrere Radialbohrungen 92 mit dem Innenraum der Hülse 88 in Verbindung steht. Letztere umfaßt ferner ein Halsteil 94, das sich in axialer Richtung von dem Hülsenkörper 89 bis zu dem Sperrelement 76 erstreckt. Der Hülsenkörper 89 weist ein abgeschrägtes Ende 95 auf, das eine Ringkante 97 definiert, die abdichtend an der konischen Ringschulter 86 des Gehäuses 12 anliegen kann. Der Durchmesser D2 der Ringkante 97 ist kleiner als der Außendurchmesser D1 des Hülsenkörpers 89. Eine abgestufte Bohrung 96 erstreckt sich axial durch den Hülsenkörper 89 und das Halsteil 94 der Hülse 88. Diese Bohrung umfaßt einen ersten Durchmesserabschnitt 98, der sich durch das Halsteil 94 erstreckt und über eine kegelförmige Anschlagfläche 100 mit einem zweiten Durchmesserabschnitt 102 verbunden ist, der seinerseits über einen schulterförmigen Axialanschlag 104 mit einem dritten Durchmesserabschnitt 106 verbunden ist.

Der Hülseneinsatz 87 umfaßt ferner einen Kolben 120 mit einem Kolbenboden 122 und einem zylindrischen Mantel 124, der verschiebbar und abdichtend in dem dritten Durchmesserteil 106 der Bohrung 96 der Hülse 88 geführt ist. Eine Axialbohrung 126 erstreckt sich mittig durch den Kolbenboden 122. Der Kolben 120 wird innerhalb der Hülse 88 durch eine Rückhalteeinrichtung gehalten, die in dem Ausführungsbeispiel aus einem Anschlagring 128 und einem Sprengring 130 besteht.

Der Hülseneinsatz 87 umfaßt ferner eine Stange 140, die sich mit einem ersten Durchmesserabschnitt 142 mit der Querschnittsfläche A1 verschiebbar durch den Bohrungsabschnitt 98 der Hülse 88 erstreckt und mit seinem freien Ende am Sperrelement 76 anliegt. Ein zweiter Durchmesserabschnitt 144 der Stange 140 erstreckt sich durch die Kolbenbohrung 126 unter Freilassung eines Ringspaltes 145. Ein dritter Durchmesserabschnitt 146 der Stange 140 weist eine Querschnittsfläche A3 auf und ist verschiebbar und abdichtend in einer Führung 148 gelagert, die in dem Gehäuse 12 über einen Sprengring 150 festgelegt ist. Die Querschnittsfläche A3 ist größer als die Querschnittsfläche A1. O-Ringe 152 bilden eine Abdichtung zwischen Gehäuse 12 und Führung 148, um die Gehäuseleitung 20 gegenüber dem Sumpfdruck Ps abzudichten, dem das äußeren Ende des Stangenabschnitts 146 ausgesetzt ist. Zwischen dem ersten und zweiten Durchmesserabschnitt 142, 144 ist ein Flansch 141 vorgesehen, der einen Kegelsitz 143 aufweist und hiermit an der Anschlagfläche 100 der Hülse 88 anliegen kann.

Hülse 88 und Stange 140 bilden zusammen mit der Wandung der Gehäusebohrung 81 einen ersten Hohlraum 108, der über die Öffnungen 85 des Sperrelementes 76 dem Sumpfdruck (Ps) ausgesetzt ist. Der Ringraum zwischen Stange 140 und Hülse 88 definiert einen zweiten Hohlraum 110, der dem Systemdruck in den Gehäuseleitungen 20, 28 über das offene Ende 112 der Hülse 88 bzw. über die Radialbohrungen 92 ausgesetzt ist. Die Stange 140 weist eine Schulter 147 auf, die gegen die Führung 148 anschlagen und so die Verschiebung der Stange 140 von dem Sperrelement 76 weg begrenzen kann.

Durch den Kolben 120 und die Stange 140 wird der zweite Hohlraum 110 in eine erste Kammer 154 unterteilt, die über die Radialbohrungen 92 mit dem Stromab-Systemdruck P2 in der Gehäuseleitung 28 in Verbindung steht, und in eine zweite Kammer 156, die mit dem Stromauf-Systemdruck P1 in der Gehäuseleitung 20, über das offene Ende 112 der Hülse 88 in Verbindung steht. Dementsprechend sind also die Querschnittsflächen A1 und A3 an sich gegenüberliegenden Enden der Stange 140 dem Sumpfdruck Ps ausgesetzt, während der mittlere Stangenabschnitt zwischen den Stangenabschnitten 142 und 146 dem Systemdruck P1 oder P2 im zweiten Hohlraum 110 ausgesetzt ist.

Ist der ersten Kammer 154 ist eine erste Feder 160 mit einer Federkonstanten K1 angeordnet und wird zusammengedrückt gehalten zwischen dem Flansch 141 der Stange 140 und dem Kolbenboden 122. Eine zweite Feder 162 mit der Federkonstanten K2, die kleiner ist als K1, ist in der zweiten Kammer 156 angeordnet und wird unter Druck gehalten zwischen dem Kolbenboden 122 und dem Anschlagring 128. Länge und Federkonstanten K1, K2 der Federn 160 und 162 sind so gewählt, daß der Kolbenboden 122 normalerweise im Abstand vom Axialanschlag 104 der Hülse 88 liegt. Eine verhältnismäßig weiche dritte Feder 164 liegt unter Vorspannung zwischen dem Anschlagring 128 und der Führung 148.

Nachfolgend wird die Funktionsweise des Hydrauliksystems erläutert: Zuerst wird angenommen, daß die nicht dargestellte Antriebsmaschine nicht arbeitet, so daß also die Pumpe 16 nicht pumpt. Ferner wird angenommen, daß sich der Hebel 60 und damit auch das Steuerventil 46 in ihrer Neutralstellung befinden, so daß Druckmittelfluß zum und vom Zylinder 54 unterbunden ist. Daraus folgt, daß kein Druckmittel durch die Gehäuseleitungen 20, 28 strömt, und daß die hier bestehenden Drücke sowie die Drücke in dem ersten Hohlraum 108 sowie in den Kammern 154, 156 gleich sind und dem Sumpfdruck entsprechen. In diesem Fall befindet sich der Hülseneinsatz 87 in seiner nicht dargestellten Neutralstellung, in der beide Federn 160, 162 ihre maximal mögliche Ausdehnung aufweisen und die Anschlagfläche 100 gegen den Kegelsitz 143 drücken, wodurch die Ringkante 97 im Abstand von der konischen Ringschulter 86 des Gehäuses 12 gehalten wird. Vorstehend wurde bereits ausgeführt, daß die Federn 160, 162 so dimensioniert sind, daß der Kolbenboden 122 im Abstand vom Axialanschlag 104 der Hülse 88 gehalten wird. In dieser Neutralstellung werden die gesamten Kräfte der Federn 160, 162 von der Hülse 88 zwischen ihre Anschlagfläche 100 und ihrem Anschlagring 128 absorbiert, so daß keine Federkraft auf das Sperrelement 76 übertragen wird. Lediglich die sehr schwach ausgelegte Feder 164 drückt das Ende des Stangenabschnitts 142 leicht gegen das Sperrelement 76, so daß diese weiche Feder 164 die einzige Kraft darstellt, mit der die Rolle 78 an der Nockenoberfläche 70 gehalten wird. Die Kraft der Feder 164 ist so klein, daß sie allein nicht ausreicht, den Stellhebel 60 und den Nocken 66 in einer Stellung festzuhalten, in der die Rolle 78 in die Vertiefung 72 oder 74 eintaucht gegen die Kraft der Zentrierfedern 56, 58. Bei abgeschalteter Pumpe und keinem Druckmittelfluß in den Gehäuseleitungen 20, 28 werden also die Zentrierfedern 56, 58 das Steuerventil 46, den Verstellhebel 60 sowie den Nocken 66 in ihre neutrale Stellung verschieben, in der die Rolle 78 aus den Vertiefungen 72, 74 herausgedrückt wird.

Unter der Annahme, daß die nicht dargestellte Antriebsmaschine eingeschaltet wird, die Pumpe 16 also zu arbeiten beginnt, sich aber der Verstellhebel 60 und das Steuerventil 46 noch in ihrer neutralen Stellung befinden, baut sich der Systemdruck in den Gehäuseleitungen 20, 28 auf. Da aber kein Druckmittelfluß zum Zylinder 54 stattfindet, gibt es auch am Mengenventil 22 keinen Druckabfall, so daß der Flüssigkeitsdruck zwischen den Gehäuseleitungen 20, 28 und zwischen den Kammern 154, 156 stromauf und stromab vom Mengenventil 22 abgeglichen ist. Jedoch besteht eine Druckdifferenz zwischen dem Systemdruck in den Gehäuseleitungen 20, 28 und dem Sumpfdruck Ps im ersten Hohlraum 108, da dieser über die Öffnungen 85 dem Sumpfdruck ausgesetzt ist. Diese Druckdifferenz bewirkt eine hydraulische Vorspannung, in dem die Hülse 88 in Richtung auf den Nocken 66 in eine Vorspannungsstellung verschoben wird (dargestellt in den Figuren 1 und 2), während die Hülsenanschlagfläche 100 vom Kegelsitz 143 der Stange abgezogen wird, die Federn 160, 162 zwischen Flansch 141 und Anschladring 128 zusammengedrückt werden, und die Ringkante 97 sich dichtend an der Gehäuseringschulter 86 anlegt. Durch diese Abdichtung wird der Flüssigkeitsstrom um die äußere Mantelfläche der Hülse 88 herum unterbunden und eine weitere Druckdifferenz aufgebaut zwischen dem Hohlraum 108 und den Gehäuseleitungen 20, 28. Die Kompression der Federn 160, 162 erzeugt die Vorspannungskraft, die über den Stangenflansch 141, den Stangenabschnitt 142 und das Sperrelement 76 die Rolle 78 gegen den Nocken 66 drückt. Diese Vorspannungskraft ist größer als die ursprüngliche Federkraft der Feder 164 während der vorstehend beschriebenen Neutralstellung. Diese Vorspannungskraft ergibt sich aus der Verschiebung der Hülse 88 infolge der Druckdifferenz zwischen dem Sumpfdruck Ps im Hohlraum 108 und dem höheren Systemdruck in den Gehäuseleitungen 20, 28, nicht aber aus der Feder 164. Die Stange 140 unterliegt einer hydraulischen Entlastungskraft, die die Stange 140 von dem Nocken 66 abziehen will. Diese hydraulische Entlastungskraft ergibt sich aus dem Druckdifferential zwischen dem Systemdruck und dem Sumpfdruck (P1-Ps), der die Querschnittsdifferenz zwischen den Stangenquerschnitten A3 und A1 beaufschlagt. Diese hydraulische Entlastungskraft wird wesentlich überschritten durch die vorstehend beschriebene Vorspannungskraft, so daß die Stange 140 fest gegen das Sperrelement 76 gedrückt wird. Hier ist festzustellen, daß sich die Hülse 88 ebenfalls in ihre Vorspannungsposition verschieben würde, wenn die Pumpe 16 gestartet würde, während die Bedienungsperson manuell das Steuerventil 46 in einer aktiven, Flüssigkeitsströmung zulassenden Stellung halten würde.

Nunmehr wird angenommen, daß sich der Hülseneinsatz 87 in seiner vorstehend beschriebenen Vorspannungsstellung befindet, und daß nun Verstellhebel 60, Nocken 66 und Steuerventil 46 von der Bedienungsperson in eine ihrer ausgewählten Arbeitsstellungen verschoben werden, in der das Druckmittel zum oder vom Zylinder 54 zu strömen beginnt, und in der eine der Vertiefungen 72 oder 74 so ausgerichtet ist, daß sie die Rolle 78 aufnehmen kann. In diesem Fall drückt die Vorspannungskraft sofort die Rolle 48 in Verriegelungsstellung mit einer der Vertiefungen 72 oder 74, während die Federn 160, 162 sich etwas ausdehnen, weil die Rolle 78 in die Vertiefung eintaucht, wobei jedoch die Hülse 88 in ihrer Vorspannungsstellung verbleibt.

Da sich das Steuerventil 46 in Arbeitsstellung befindet, beginnt nunmehr das Druckmittel durch die Gehäuseleitungen 20, 28 zu strömen, während das Steuerventil 46 einer hydraulischen Rückstellkraft unterworfen ist, die das Steuerventil 46 in seine Neutralstellung zurückzuverschieben trachtet. Diese hydraulische Rückstellkraft nimmt mit Zunahme der Flüssigkeitsströmung ebenfalls zu. Da aber diese Flüssigkeitsströmung am Mengenventil 22 ein Druckdifferential erzeugt, ist der Stromauf-Systemdruck P1 in der Gehäuseleitung 20 höher als der Stromab-Systemdruck P2 in der Gehäuseleitung 28. Der genannte Druck P1 wird über das offene Ende 112 der Hülse 88 und die Öffnung in dem Anschlagring 128 auf die Kammer 156 gegeben. Der genannte Stromab-Druck P2 wird über den Ringschlitz 91 und die Radialbohrungen 92 auf die Kammer 154 gegeben. Dieser Differenzdruck (P1-P2) zwischen den Kammern 156 und 154 erzeugt eine hydraulische Sperrkraft, in dem der Kolben 120 nach links verschoben wird (bezogen auf Figur 2) und dabei die Feder 160 zusammendrückt und so die auf den Flansch 141 einwirkende Kraft erhöht, die über die Stange 140 und das Sperrelement 76 die Rolle 78 innerhalb der Vertiefung 72 oder 74 festhält. Nimmt der Druckmittelfluß zu, erhöht sich auch die Druckdifferenz (P1-P2) für eine bestimmte Einstellung des Mengenventils 22, und dementsprechend nimmt auch die hydraulische Sperrkraft zu. Diese erhöhte hydraulische Sperrkraft kompensiert die erhöhte hydraulische Ventilverstellkraft und verhindert dadurch eine Verschiebung des Steuerventils 46 in seine Neutralstellung. Es ist festzustellen, daß die Hülse 88 in ihrer Vorspannungsstellung verbleibt, nachdem das Steuerventil 46 in eine Arbeitsstellung verschoben worden ist. Bei dieser Arbeitsposition setzt sich also die Sperrkraft bzw. Verriegelungskraft zusammen aus der hydraulischen Vorspannungskraft und der hydraulischen Kolbensperrkraft. Die kombinierte Lösungskraft setzt sich zusammen aus den Kräften der Zentrierfedern, der hydraulischen Stangenlösungskraft und der hydraulischen Ventillösungskraft. In dieser Arbeitsstellung ist die kombinierte Verriegelungskraft größer als die kombinierte Lösungskraft und verhindert ein Lösen der Arretiervorrichtung 64. Außerdem werden die flüssigkeitserzeugten Verriegelungskräfte innerhalb eines Zeitintervalls aufgebaut, das kürzer ist als die Reaktionszeit der Bedienungsperson, so daß er nicht wissentlich den Stellhebel 60 in der Arbeitsstellung halten, muß, während er darauf wartet, daß die hydraulischen Verriegelungskräfte einen Wert erreichen, der ausreicht, die kombinierten Lösungskräfte zu übersteigen.

Falls keine anderen Begrenzungen vorgesehen wären, würde es die zunehmende hydraulische Sperrkraft für die Bedienungsperson schwierig machen, manuell die Arretiervorrichtung 64 zu übersteuern durch Verschieben des Hebels 60, des Nockens 66 und des Steuerventils 46 zurück in ihre Neutralstellungen. Erfindungsgemäß ist jedoch zur Begrenzung dieser hydraulischen Sperrkraft der Axialanschlag 104 in der Hülse 88 vorgesehen. Bewegt sich z. B. der Kolben 120 infolge des zunehmenden Druckdifferentials (P1-P2) nach links, so schlägt der Kolbenboden 122 schließlich am Axialanschlag 104 an. An dieser Stelle wird ein weiteres Zusammendrücken der Feder 160 verhindert, und die auf den Kolben 120 wirkende Kraft, die sich aus einem weiteren Anstieg des Druckdifferentials (P1-P2) ergibt, wird auf das Gehäuse 12 übertragen und zwar durch die Anlage des Kolbenbodens 122 an der Schulter 104 und die Anlage der Hülsenringkante 97 an der Gehäuseringschulter 86. Der Axialanschlag 104 begrenzt somit die Kompression der Feder 160 und begrenzt die vorstehend beschriebene hydraulische Sperrkraft. Der Kolbenboden 122 schlägt am Axialanschlag 104 an, bevor die Feder 160 vollständig zusammengedrückt ist, so daß sich die Stange 140 nach rechts bewegen kann (bezogen auf Figur 2), so daß die Rolle 78 aus der Vertiefung 72 oder 74 während einer manuellen Übersteuerung austreten kann, ohne daß auch der Kolben 120 vom Axialanschlag 104 gegen den Differenzdruck (P1-P2) verschoben werden muß.

Hohe Differenzdrücke (P1-P2) zwischen den Kammern 156 und 154 können sich ergeben, wenn das Mengenventil 22 auf kleine Strömungsmengen eingestellt ist. Der Ringspalt 145 zwischen Kolben 120 und Stangenabschnitt 144 ist vorgesehen, um ein Fressen der Stange 140 und des Kolbens 124 zu verhindern und eine minimale Druckmittelströmung auch dann zu ermöglichen, wenn das Mengenventil 22 vollständig geschlossen ist.

Es ist möglich, daß der von der Pumpe 16 kommenden Systemdruck ausfällt, während sich das Steuerventil in seiner Arbeitsstellung befindet, und während Druckmittel zum oder vom Zylinder 54 strömt. Dieser Druckabfall kann sich ergeben, wenn die Antriebsmaschine aufhört zu arbeiten, während der Zylinder 54 betätigt wird. In diesem Fall verringert sich das Druckdifferential zwischen den Drücken P1 und P2, und beide Drücke P1 und P2 erreichen den Sumpdruck Ps. Bei abnehmendem Druckdifferential (P1-P2) bewegt sich der Kolben 120 nach rechts und erlaubt somit eine Ausdehnung der Feder 160 und dadurch eine Verminderung der hydraulischen Kolbensperrkraft. Erreichen die Drücke P1 und P2 eine vorbestimmte untere Grenze, dann hebt die Hülse 88 durch die Kraft der Federn 160 und 162 mit ihrer Ringkante 97 von der konischen Ringschulter 86 ab. Die Ringkante 97 bewegt sich deshalb von der Ringschulter 86 weg und erhöht dadurch den Leckstrom zwischen den Hohlräumen 110 und 108 um die äußere Mantelfläche der Hülse 88 herum. Dieser erhöhte Leckstrom führt zu einer weiteren Reduzierung der genannten Druckdifferenz und stellt sicher, daß die Hülse 88 sich weiter wegbewegt von der Gehäuseringschulter 86, so daß sich die Federn 160 und 162 weiter entspannen, bis die Hülsenanschlagfläche 100 den Kegelsitz 143 der Stange 140 berührt ; an dieser Stelle wird wiederum die gesamte Kraft der Federn 160, 162 aufgenommen zwischen der Hülsenanschlagfläche 100 und dem Anschlagring 128. An dieser Stelle drücken die Federn 160, 162 das Ende des Stangenabschnitts 142 nicht mehr gegen das Sperrelement 76, so daß die vorstehend beschriebene Vorspannkraft aufgehoben ist. Durch die Eliminierung der Vorspannungskraft und der hydraulischen Kolbensperrkraft können die Zentrierfedern 56, 58 automatisch Steuerventil 46, Hebel 60 und Nocken 66 zurück in ihre Neutralstellung verschieben, ohne daß es irgendwelcher Beachtungen seitens der Bedienungsperson bedarf. Dies verhindert eine zufällige Betätigung des Zylinders 54, falls Pumpendruck wiedergewonnen wird, wenn der Fahrer des Fahrzeugs die Fahrzeugmaschine wieder startet.

Erreicht der Zylinder 54 das Ende seines Hubes während normaler Betätigung, hört der Druckmittelfluß durch das Steuerventil 46 und durch die Gehäuseleitungen 20, 28 auf, und der Druck P2 nähert sich dem Druck P1, da das Druckdifferential (P1-P2) am Mengenventil 22 abnimmt. Dadurch wird der Kolben 120 verschoben und eine Ausdehnung der Feder 160 ermöglicht, wodurch die vorstehend beschriebene hydraulische Kolbensperrkraft begrenzt wird, so daß lediglich die Vorspannungssperrkraft verbleibt, um einer Bewegung des Nockens 66 in seine Neutralstellung entgegenzuwirken. Bei aufhörender Druckmittelströmung endet auch die hydraulische Ventillösungskraft. Da jedoch die Pumpe 16 noch arbeitet, wird die Stange 140 immer noch mit der vorstehend beschriebenen Stangenlöskraft beaufschlagt. Demgemäß setzt sich am Ende des Zylinderhubes die kombinierte Löskraft zusammen aus der Federzentrierkraft und der hydraulischen Stangenlöskraft. Diese kombinierte Löskraft ist größer als die verbleibende Vorspannungssperrkraft, so daß Hebel 60, Nocken 66 und Steuerventil 46 automatisch in ihre Neutralstellung zurückkehren und dabei die Rolle 78 aus der Vertiefung 72 oder 74 am Ende des Kolbenhubes herausziehen.

Beginnt der Nocken 66 während des Lösungsvorganges zu verschwenken, so daß die Rolle 78 aus der Vertiefung 72 oder 74 herausgezogen wird, nimmt die effektive, auf die Rolle 78 wirkende Löskraft zu und zwar als Folge der Winkelveränderung des Punktes, an dem die Rolle 78 an der Nockenoberfläche 70 anliegt. Die effektive Zunahme der Löskraft ist größer als die zusätzliche Sperrkraft, die sich aus der Zusammendrückung der Federn 160, 162 ergibt infolge der Bewegung der Rolle 78 aus der Vertiefung heraus. Ist also die Lösung der Verriegelung erst einmal eingeleitet, wird sie bis zur vollständigen Erreichung durchgeführt.

Bei rückwärts gerichteter Strömung kann sich eine Lösung zur Entriegelung dann ergeben, wenn ein zusätzlicher, nicht dargestellter Hydraulikzylinder, der geringeren Druck benötigt als der Zylinder 54, schnell betätigt wird durch ein Parallelventil, das an dieselbe Druckquelle angeschlossen ist, während das Steuerventil 46 den Zylinder 54 betätigt. Es wäre wünschenswert, wenn die Arretiervorrichtung auch bei dieser Bedingung das Steuerventil 46 in seiner Arbeitsstellung festhalten würde, so daß die Bedienungsperson das Steuerventil 46 nicht zu reaktivieren braucht, wenn die genannte Bedingung endet. Während dieser rückwärtigen Strömung kann der Systemdruck schnell abfallen und das Druckmittel kann durch das Mengenventil 22 in umgekehrter Richtung strömen und dabei ein Druckdifferential erzeugen, das den Kolben 120 vom Nocken 66 weg zu schieben trachtet und eine Ausdehnung der Feder 160 bewirkt, wodurch die hydraulische Kolbensperrkraft reduziert wird und ein Lösen der Arretiervorrichtung anstrebt. Erfindungsgemäß wird diese ungewünschte Lösung der Arretiervorrichtung verhindert durch die axiale Verlängerung des zylindrischen Teils 124 des Kolbens 120. Das Ende dieses zylindrischen Teils 124 kann gegen den Anschlagring 128 anschlagen und so die Bewegung des Kolbens 120 in einer vom Nocken 66 weggerichteten Richtung begrenzen, wodurch auch eine Ausdehnung der Feder 160 begrenzt wird. Solange also der Systemdruck während der rückwärtsgerichteten Druckmittelströmung ausreicht, die Hülse 88 gegen die Gehäuseringschulter 86 zu halten, hält die begrenzte Ausdehnung der Feder 160 zumindest eine vorbestimmte Verriegelungkraft aufrecht, um ein Lösen der Arretiervorrichtung während dieser Rückwärtsströmung zu verhindern.

**Ansprüche**

1. Hydrauliksystem mit einer Druckmittelquelle (16), einem Sumpf (14), einem Steuerventil (46) mit bestimmten Arbeitsstellungen zur Steuerung des Druckmittelflusses zwischen Quelle (16), Sumpf (14) und einem Hydromotor (54) o. dergl., einer Druckmittelverbindung (20, 28, 38, 44) zwischen Quelle (16) und Steuerventil (46), mit einem Mengenventil (22), das die Druckmittelverbindung (20, 28) zwischen Quelle (16) und Steuerventil (46) in einen stromauf (20) und einen stromab gelegenen Abschnitt (28) unterteilt, mit einer Arretiervorrichtung (64), die in eine Arretierstellung verschiebbar ist, um so das Steuerventil (46) in zumindest einer seiner gewählten Arbeitsstellungen lösbar festzuhalten, und mit einer druckgesteuerten Einrichtung (80), die die Arretiervorrichtung (64) in ihre Arretierstellung drückt und eine Verstellung des Steuerventils (46) aus der gewählten Arbeitsstellung heraus verhindert, wobei diese druckgesteuerte Einrichtung (80) zusätzlich aufweist :

— eine Gehäusebohrung (81), die mit der Arretiervorrichtung (64) fluchtet und an ihrem einen Ende an den stromauf liegenden Abschnitt (20) der Druckmittelverbindung (20, 28) angeschlossen ist ;

— einen Kolben (120), der innerhalb der Gehäusebohrung (81) verschiebbar gelagert ist und dessen eines Ende von dem Druck (P1) im stromauf liegenden Abschnitt (20) und dessen anderes Ende von dem Druck (P2) im stromab liegenden Abschnitt (28) beaufschlagt sind, wobei der Kolben (120) mit einer Axialbohrung (126) in seinem Kolbenboden (122) verschiebbar auf einer Stange (140) geführt ist, die mit ihrem einen Ende (142) an der Arretiervorrichtung (64) anliegt,

— eine Feder (162), die den Kolben (120) beaufschlagt und über eine Kopplung (160, 143) zwischen Kolben (120) und Stange (140) diese gegen die Arretiervorrichtung (64) schiebt ; gekennzeichnet durch folgende Merkmale :

a) das zweite Ende (108) der Gehäusebohrung (81) ist an den Sumpf (14) angeschlossen ;

b) in der Gehäusebohrung (81) ist eine den Kolben (120) umschließende Hülse (88) verschiebbar gelagert, deren eines offenes Ende (112) mit dem stromauf liegenden Abschnitt (20) der Druckmittelverbindung (20, 28) in Verbindung steht, während sein anderes, mit dem Sumpf (14) in Verbindung stehendes Ende (94) halsförmig ausgebildet ist und mit einer Bohrung (98) verschiebbar und abdichtend auf der Stange (140) geführt ist ;

c) die Stange (140) weist einen innerhalb der Hülse (88) liegenden verdickten Abschnitt (141) auf ;

d) der Kolben (120) ist zwischen dem offenen Hülsenende (112) und dem verdickten Stangenabschnitt (141) verschiebbar, wobei seine Verschiebung zum offenen Hülsenende (112) hin durch einen ersten Anschlag (128) begrenzt ist ;

e) eine erste Feder (160) stützt sich zwischen Kolben (120) und verdicktem Stangenabschnitt (141) ab ;

f) eine zweite Feder (162) stützt sich zwischen dem ersten Anschlag (128) und dem Kolben (120) ab ;

g) in die Hülse (88) mündet zwischen ihrem halsförmigen Ende (94) und dem Kolben (120) Öffnung (92), die an den stromab liegenden Abschnitt (28) der Druckmittelverbindung (20, 28) angeschlossen ist.

2. Hydrauliksystem nach Anspruch 1, dadurch gekennzeichnet, daß ein zweiter Anschlag (86) in der Gehäusebohrung (81) die Verschiebung der Hülse (88) in Richtung der Arretiervorrichtung (64) begrenzt.

3. Hydrauliksystem nach Anspruch 1 oder 2, dadurch gekennzeichnet, daß ein dritter Anschlag (104) in der Hülse (88) die Verschiebung des Kolbens (120) in Richtung der Arretiervorrichtung (64) begrenzt.

4. Hydrauliksystem nach Anspruch 1, 2 oder 3, dadurch gekennzeichnet, daß die beiden Federn (160, 162) ausreichende Länge aufweisen, um den verdickten Stangenabschnitt (141) an dem halsförmigen Teil (94) der Hülse (88) anliegen zu lassen.

**Claims**

1. A hydraulic system having a source of fluid pressure (16), a sump (14), a control valve (46) having selected working positions for controlling fluid flow between source (16), sump (14) and a fluid motor (54) or the like, passage means (20, 28, 38, 44) for communicating fluid between source (16) and control valve (46), a metering valve (22) dividing the passage means (20, 28) for fluid pressure between source (16) and control valve (46) into an upstream portion (20) and a downstream portion (28), detent means (64) movable to a locking position for releasably holding the control valve (46) in at least one of its selected working positions, and pressure-responsive means (80) urging the detent means (64) to its locking position and preventing movement of the control valve (46) out of the selected working position, the pressure-responsive means (80) additionally comprising :
— a housing bore (81) in alignment with the detent means (64) and being connected with one end to the upstream portion (20) of the passage means (20, 28) ;
— a piston (120) slidably mounted in the housing bore (81) one end of which being actuated by the pressure (P1) in the upstream portion (20) and the other end of which being actuated by the pressure (P2) in the downstream portion (28), whereby the piston (120) is slidably guided by an axial bore (126) in its piston head (122) on a rod (140) having one end (142) in engagement with said detent means (64) ;
— a spring (162) actuating said piston (120) and urging said rod (140) via a coupling (160, 143) between piston (120) and rod (140) towards said detent means (64) ;
characterized by the following features :
a) the second end (108) of said housing bore (81) is connected to said sump (14) ;
b) a sleeve (88) surrounding said piston (120) is slidably mounted in the housing bore (81), said sleeve having an open end (112) communicating with the upstream portion (20) of the passage means (20, 28) for fluid pressure, while its other end (94) being neck-shaped and communicating with said sump (14) being slidably and sealingly guided on the rod (140) by a bore (98) ;
c) said rod (140) has an enlarged portion (141) located within the sleeve (88) ;
d) said piston (120) is slidable between the open end (112) of said sleeve and the enlarged portion (141) of the rod, whereby its displacement towards the open end (112) of said sleeve (88) is limited by a first stop (128) ;
e) a first spring (160) is positioned between said piston (120) and said enlarged portion (141) of the rod ;
f) a second spring (162) is positioned between said first stop (128) and said piston (120) ; and
g) an opening (92) opens into said sleeve (88) between its necked end (94) and the piston (120) and is connected to said downstream portion (28) of said passage means (20, 28) for the fluid pressure.

2. Hydraulic system according to Claim 1, characterized in that a second stop (86) in the housing bore (81) limits the displacement of the sleeve (88) in the direction of said detent means (64).

3. Hydraulic system according to Claim 1 or 2, characterized in that a third stop (104) in the sleeve (88) limits the movement of the piston (120) in the direction of said detent means (64).

4. Hydraulic system according to Claim 1, 2 or 3, characterized in that the two springs (160, 162) have a sufficient length to have the enlarged portion (141) of the rod in engagement with the necked portion (94).

**Revendications**

1. Système hydraulique comportant une source (16) de fluide sous pression, un réservoir (14), une valve de commande (46) comportant des positions de travail déterminées pour la commande de l'écoulement du fluide sous pression entre la source (16), le réservoir (14) et un vérin hydraulique (54) ou analogue, un passage de communication (20, 28, 38, 44) pour le fluide sous pression entre la source (16) et la valve de commande (46), une valve de contrôle de débit (22), qui divise le passage de communication (20, 28) entre la source (16) et la valve de commande (46) en un tronçon amont (20) et un tronçon aval (28), un dispositif de verrouillage (64) qui peut être amené par coulissement dans une position de verrouillage, pour maintenir ainsi amoviblement la valve de commande (46) dans l'une au moins de ses positions de travail, et un dispositif commandé par la pression (80) qui repousse le dispositif de verrouillage (64) dans sa position de verrouillage et empêche un déplacement de la valve de commande (46) à partir de sa position de travail choisie, ce dispositif (80) commandé par la pression comportant en outre :
— un perçage (81) ménagé dans le carter, qui coïncide avec le dispositif de verrouillage (64) et qui est raccordé par l'une de ses extrémités au tronçon amont (20) du passage de communication (20, 28) prévu pour le fluide sous pression ;
— un piston (120) qui est monté de façon coulissante dans le perçage de carter (81), dont une extrémité est soumise à l'effet de la pression (P1) régnant dans le tronçon amont (20) et dont l'autre extrémité est soumise à l'effet de la pression (P2) régnant dans le tronçon aval (28), le piston (120) étant guidé par un perçage axial (126) ménagé dans son fond (122) de façon à pouvoir coulisser sur une tige (140) qui s'applique par l'une de ses extrémités (142) sur le dispositif de verrouillage (64) ;

— un ressort (162) qui agit sur le piston (120) et qui par l'intermédiaire d'un accouplement (160, 143) prévu entre le piston (120) et la tige (140), repousse celle-ci contre le dispositif de verrouillage (64) ; caractérisé par les particularités suivantes :

a) la seconde extrémité (102) du perçage de carter (81) est raccordée au réservoir (14) ;

b) un manchon (88) entourant le piston (120) est monté de façon coulissante dans le perçage de carter (81), une extrémité ouverte (112) de ce manchon étant en communication avec le tronçon amont (20) du passage de communication (20, 28) prévu pour le fluide sous pression, tandis que son autre extrémité (94) communiquant avec le réservoir (14) a une forme de collerette et est guidée de façon coulissante et étanche sur la tige (140) par un perçage (98) ;

c) la tige (140) présente une partie plus large (141) disposée à l'intérieur du manchon (88) ;

d) le piston (120) peut coulisser entre l'extrémité ouverte (112) du manchon et la partie plus large (141) de la tige, son coulissement en direction de l'extrémité ouverte (112) du manchon étant limité par une première butée (128) ;

e) un premier ressort (160) prend appui entre le piston (120) et la partie plus large (141) de la tige ;

f) un second ressort (162) prend appui entre la première butée (128) et le piston (120) ;

g) un orifice (92) qui est raccordé au tronçon aval (28) du passage de communication (20, 28) débouche dans le manchon (88) entre son extrémité en forme de collerette (94) et le piston (120).

2. Système hydraulique suivant la revendication 1, caractérisé en ce qu'une seconde butée (86) limite, dans le perçage de carter (81), le déplacement du manchon (88) en direction du dispositif de verrouillage (64).

3. Système hydraulique suivant la revendication 1 ou 2, caractérisé en ce qu'une troisième butée (104) limite, dans le manchon (88), le déplacement du piston (120) en direction du dispositif de verrouillage (64).

4. Système hydraulique suivant la revendication 1, 2 ou 3, caractérisé en ce que les deux ressorts (160, 162) ont une longueur suffisante pour que la partie la plus large (141) de la tige puisse venir s'appliquer contre la partie en forme de collerette (94) du manchon (88).

FIG. 1

# FIG. 2